# EUROPEAN PATENT SPECIFICATION

(11) **EP 2 020 536 B1**
(45) Date of publication and mention of the grant of the patent: **31.08.2011**
(21) Application number: 08160937.2
(22) Date of filing: 23.07.2008
(51) Int. Cl.: F16H 57/04

(54) **Power unit for a motorcycle**
Antriebseinheit für Motorrad
Groupe moteur pour motocycle

(30) Priority: 26.07.2007 JP 2007194963
(43) Date of publication of application: 04.02.2009
(73) Proprietor: Honda Motor Co., Ltd., Tokyo (JP)
(72) Inventor: Watanabe, Satoru, 4-1, Chuo 1-chome Wako-shi Saitama Saitama (JP); Fujita, Hisayoshi, 4-1, Chuo 1-chome Wako-shi Saitama Saitama (JP); Morita, Go, 4-1, Chuo 1-chome Wako-shi Saitama Saitama (JP)
(74) Representative: Quinterno, Giuseppe

(56) References cited:
- JP-A- 2001 065 672
- US-A1- 2005 229 742

## Description

The present invention relates to a power unit to be mounted on a motorcycle, of the kind defined in the preamble of claim 1.

A power unit of that kind, including a continuously variable belt transmission with an associated cooling structure, is disclosed in US-A-2005/02229742.

A similar power unit is disclosed in JP-A-2001/65672.

It is an object of the present invention to provide an improved power unit of the initially defined kind.

This object is achieved according to the invention by a power unit as defined in claim 1.

The invention as set forth in claim 2 is further characterized in that the front-side cover rib is provided between a side edge of the extension part and the rear-side cover rib.

The invention as set forth in claim 3 is further characterized in that the extension part of the front-side side cover is extended rearwards while being tapered at an acute angle and with its vertical width gradually decreased.

The invention as set forth in claim 4 is further characterized in that a filter element is interposed at the cooling airflow inlet port of the transmission case cover; and the front-side cover rib is formed with a rib arcuate part extending forwards so as to surround the outer periphery of the filter element.

The invention as set forth in claim 5 is further characterized in that a second front-side cover rib is formed so as to surround further externally the rib arcuate part, surrounding the outer periphery of the filter element, of the front-side cover rib.

Claims 6 and 7 define two possible alternative embodiments.

In a power unit as set forth in claim 1, the cooling airflow intake passage is provided with the front-side cover rib projecting from the extension part toward a bottom wall of the recessed part of the rear-side side cover, substantially in parallel to a side edge of the extension part of the first side cover. The front-side cover rib is provided with a rear-side cover rib projecting in parallel to the front-side cover rib from the bottom wall of the recessed part toward the extension part. As a result, the cooling airflow taken in through the cooling airflow intake gap formed along the side edge of the extension part of the first side cover passes through a labyrinth defined by the front-side cover rib and the rear-side cover rib in the cooling airflow intake passage, whereby it is possible to prevent penetration of muddy water or foreign matter into the depth relative to the cooling airflow intake passage.

In a power unit as set forth in claim 2, the front-side cover rib is provided between a side edge of the extension part and the rear-side cover rib. This ensures that the cooling airflow taken in through the cooling airflow intake gap can flow smoothly through the cooling airflow intake passage by being guided sequentially by the front-side cover rib and the rear-side cover rib, and, therefore, the quantity of the cooling air taken in can be increased.

In a power unit as set forth in claim 3, the extension part of the first side cover is extended rewards while being tapered at an acute angle and with its vertical width gradually decreased, so that the cooling airflow intake gaps formed along the upper and lower side edges of the extension part are also formed in the state of being bent at an acute angle. Therefore, it is possible to make large the distance of the cooling airflow intake gaps in the side cover which is restricted in vertical width, to increase the quantity of the cooling air taken in, and to enhance the cooling capability.

In a power unit as set forth in claim 4, the filter element is interposed at the cooling airflow inlet port of the transmission case cover, and the front-side cover rib is formed with the rib arcuate part extending forwards so as to surround the outer periphery of the filter element. This ensures that the cooling airflow coming into the inside of the front-side cover rib forming a closed loop can be efficiently guided to the filter element and be introduced into the transmission chamber through the filter element, whereby the efficiency of cooling the belt-type non-stage transmission can be enhanced.

In a power unit as set forth in claim 5, the second front-side cover rib is formed so as to surround further externally the rib arcuate part surrounding the outer periphery of the filter element of the front-side cover rib, so that the noise leaking from the cooling airflow passage to the exterior can be reduced by the double-rib structure.

Now, an embodiment of the present invention will be described below, based on FIGS. 1 to 18.
FIG. 1 is a side view of a motor scooter type motorcycle on which a power unit according to an embodiment of the present invention is mounted.
FIG. 2 is an appearance left side view of the power unit.
FIG. 3 is a left side view of the power unit from which a front-side cover and a rear-side cover constituting a left-side armor cover for the power unit have been detached.
FIG. 4 is a left side view of the power unit from which a transmission case cover has further been detached.
FIG. 5 is a partly omitted right side view of the power unit from which a reduction gear cover has been detached.
FIG. 6 is a developed sectional view taken along line VI-VI of FIG. 2.
FIG. 7 is an enlarged view of a part of FIG. 6.
FIG. 8 is a left side view of the transmission case cover 24.
FIG. 9 is a right side view of the same.
FIG. 10 is a sectional view taken along line X-X of FIG. 8.
FIG. 11 is a sectional view taken along line XI-XI of FIG. 8.
FIG. 12 is a left side view of a front-side side cover.
FIG. 13 is a right side view of the same.
FIG. 14 is a left side view of a rear-side side cover.
FIG. 15 is a right side view of the same.
FIG. 16 is a left side view showing the condition where the front-side side cover and the rear-side side cover are laid on each other at an extension part 26E and a recessed part 27D.
FIG. 17 is a sectional view taken along line XVII-XVII of FIG. 16.
FIG. 18 is a perspective view of a substantially rear half part of the power unit.

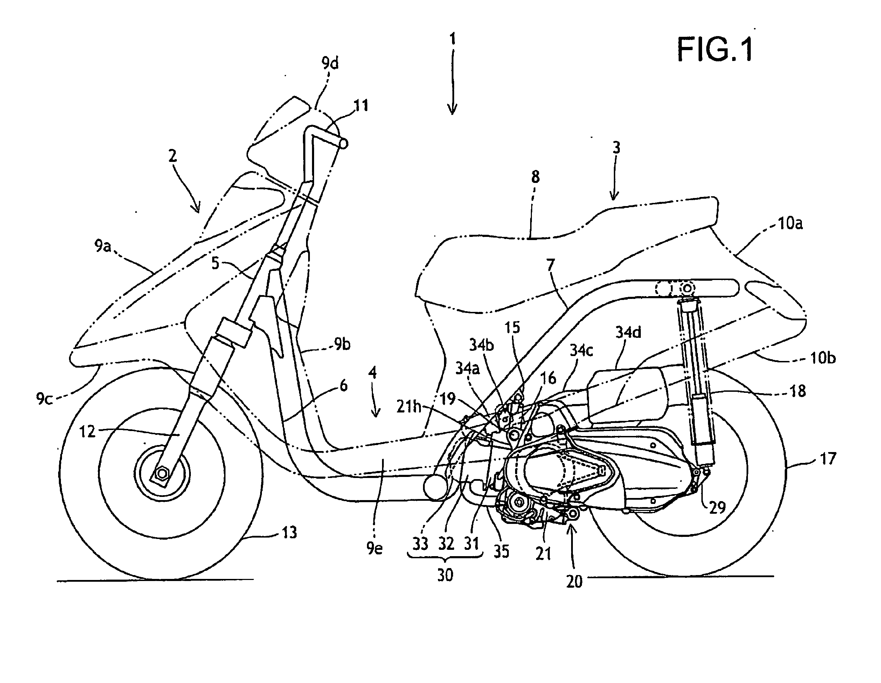

FIG. 1 is a side view of a motor scooter type motorcycle 1 on which a power unit 20 according to an embodiment of the present invention is mounted.

In the motorcycle 1, a body front part 2 and a body rear part 3 are connected to each other through a low floor part 4, and a body frame constituting the skeleton of the vehicle body is composed generally of a down tube 6 and main pipes 7.

More specifically, the down tube 6 extends downwards from a head pipe 5 of the body front part 2. The down tube 6 is bent at its lower end to be horizontal, and then extends rearwards on the lower side of the floor part 4. A left-right pair of main pipes 7 are connected to each other at the rear end of the down tube 6, and the main pipes 7 rise from the connected part thereof toward an upper rear side, are then bent at a predetermined height to be horizontal, and extend rearwards.

A fuel tank and a luggage box are supported by the main pipes 7, and a seat 8 is disposed on the upper side thereof.

On the other hand, on the side of the body front part 2, a steering handle 11 is provided on the upper side while being rotatably supported by the head pipe 5, a front fork 12 extends downwards, and a front wheel 13 is rotatably supported on the lower ends of the front fork 12.

Brackets 15 are projectingly provided near the centers of slant parts of the main pipes 7, and a power unit 20 is swingably and connectedly supported through a link member 16 rotatably supported on the bracket 15.

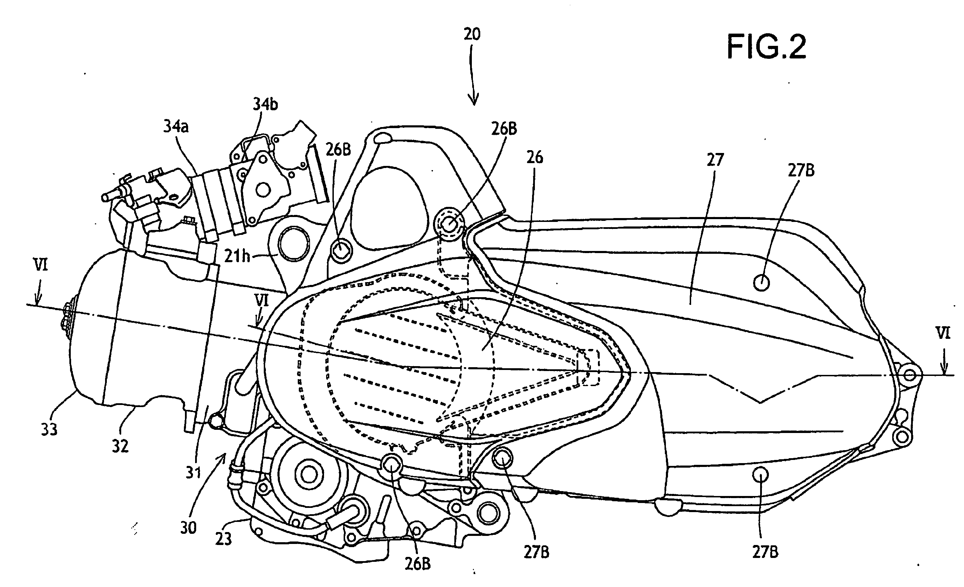

The power unit 20 has a configuration in which an internal combustion engine 30 is configured in a front part of a unit case 21, a belt type non-stage transmission 50 is disposed in the range from the internal combustion engine 30 to the rear side, and a reduction gear mechanism 110 is integrally provided at a rear part of the transmission 50, with an output shaft of the reduction gear mechanism 110 forming a rear axle 114 equipped with a rear wheel 17 (see FIG. 2).

In the power unit 20, a left-right pair of power unit hangers 21h, 21h are projected forwards from front upper parts of a front part of the unit case 21, and the power unit hangers 21h, 21h are connected to the lower end of the link member 16 through a pivot shaft 19; on the other hand, at a swingable rear part of the unit case 21, a rear cushion 18 is interposed between a bracket 29 at the rear end of the unit case 21 (transmission case 23) and the main pipe 7 (see FIG. 1).

The internal combustion engine 30 is a single-cylinder 4-stroke-cycle internal combustion engine, wherein a cylinder block 31, a cylinder head 32 and a cylinder head cover 33 are projected from a front surface of the unit case 21 in a stacked manner and in a posture largely inclined forwards into a nearly horizontal state.

A throttle body 34b is connected to an intake pipe 34a which is extended upwards from an intake port on the upper side in the cylinder head 32 and bent to the rear side. A connecting tube 34c extended rearwards from the throttle body 34b is connected to an air cleaner 34d disposed at a rear half part of the unit case 21 along the left side of the rear wheel 17.

In addition, an exhaust pipe 35, which is extended downwards from an exhaust port on the lower side in the cylinder head 32 and bent to the rear side, extends rearwards in the state of being deviated to the right side, to be connected to a muffler (not shown) disposed on the right side of the rear wheel 17.

The body front part 2 is covered with a front cover 9a and a rear cover 9b on the front and rear sides, and is covered with a front lower cover 9c on the left and right sides. A central part of the steering handle 11 is covered with a handle cover 9d.

The floor part 4 is covered with a side cover 9e, and the body rear part 3 is covered with a body cover 10a and tail side covers 10b on the left and right sides.

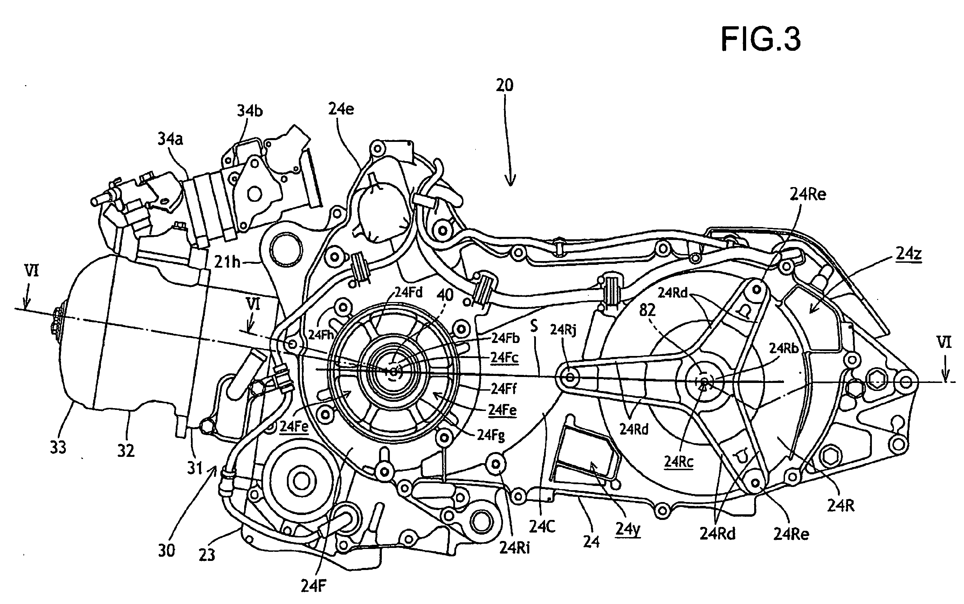

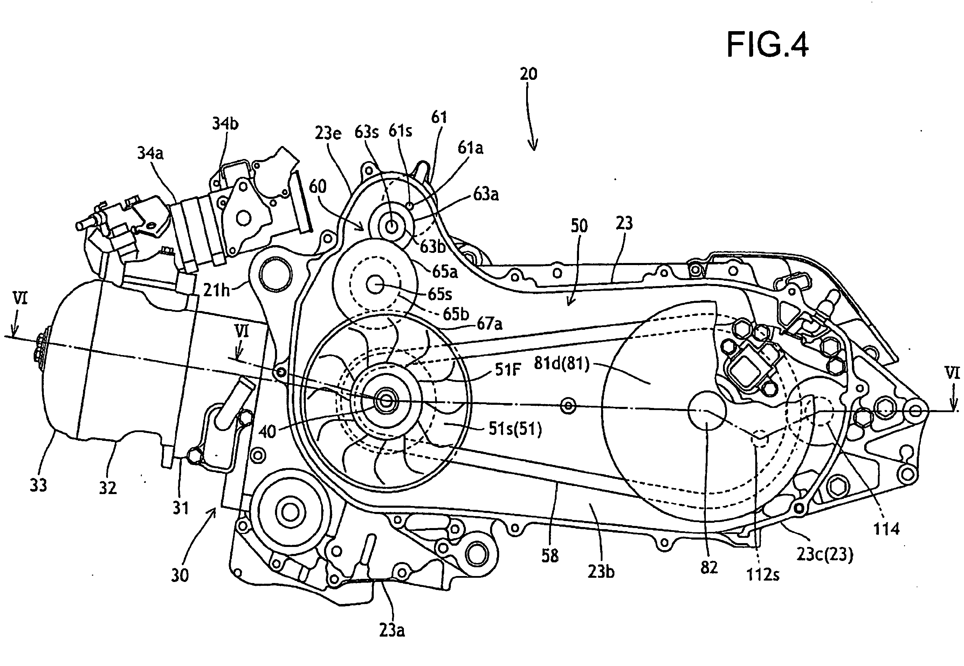

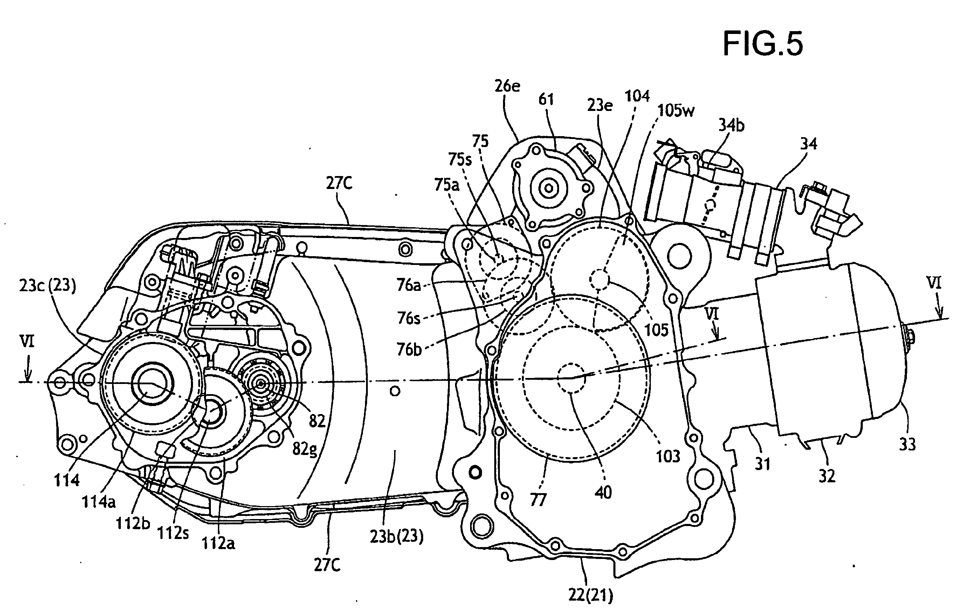

FIG. 2 is a left side view showing the appearance of the power unit 20; FIG. 3 is a left side view showing the condition where a front-side side cover 26 and a rear-side side cover 27 constituting a left-side armor cover of the power unit 20 are detached; FIG. 4 is a left side view showing the condition where the transmission case cover 24 of the power unit 20 is further detached; and FIG. 5 is a right side view showing the condition where a reduction gear cover 25 is detached, with the power unit 20 being partly omitted in the figure.

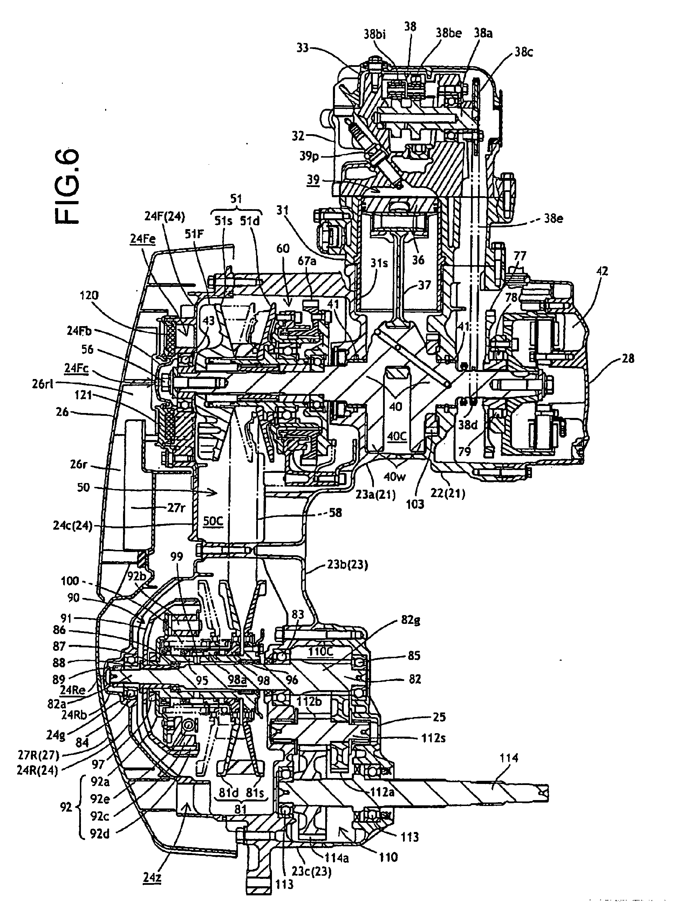

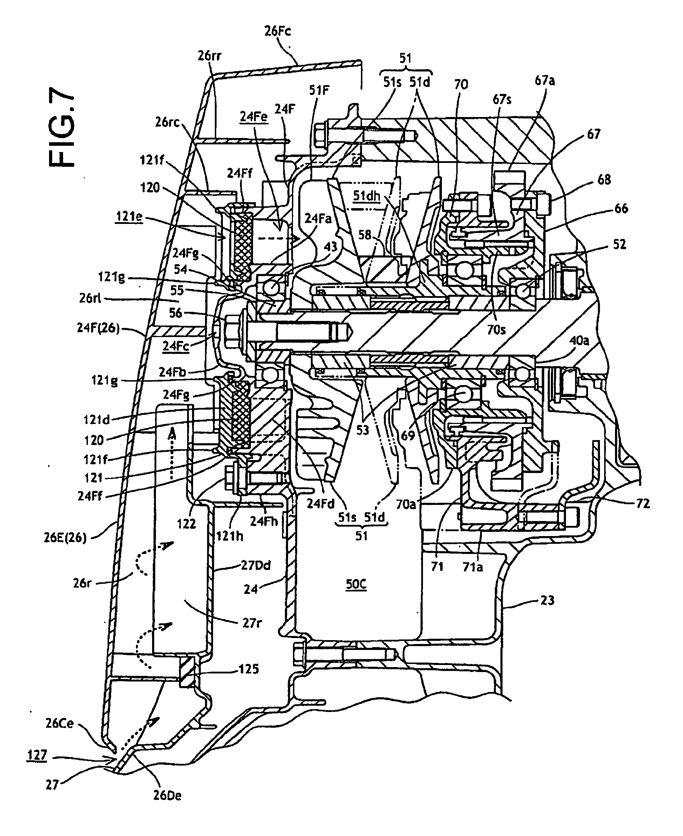

FIG. 6 is a sectional view taken along line VI-VI of FIG. 2 and developed, and FIG. 7 is an enlarged view of a part of FIG. 6.

Referring mainly to FIG. 6, the unit case 21 is split into left and right unit cases, and the left unit case is extended rearwards relative to the right unit case 22 so as to form a transmission case 23.

The transmission case 23 is comprised of a left crankcase part 23a formed on the right side of a front part, a transmission case part 23b formed on the left side over the range from the front part to a rear part, and a reduction gear part 23c formed on the right side of the rear part. The left crankcase part 23a at the front part is mated with the right unit case 22 to form a crank chamber 40C for containing a crankshaft 40, while the transmission case part 23b is covered with a transmission case cover 24 on the left side to form a transmission chamber 50C for containing a belt type non-stage transmission 50, and the reduction gear part 23c at the rear part is covered with a reduction gear cover 25 to form a reduction gear chamber 110C for containing the reduction gear mechanism 110.

In the crank chamber 40C, a cylinder sleeve 31s formed inside the cylinder block 31 is projected to the inside of the crank chamber 40C, and the reciprocating motion of a piston 36 slidably fitted in the cylinder sleeve 31s is transmitted through a connecting rod 37 to the crankshaft 40 rotatably borne on the unit case 21 while being oriented in the left-right horizontal direction, whereby the crankshaft 40 is rotated.

An intake rocker arm 38bi and an exhaust rocker arm 38be are in swingable contact with a cam shaft 38a of a valve-operating mechanism 38 provided in the cylinder head 32 inclined forwards into a nearly horizontal state. An intake valve (not shown) and an exhaust valve (not shown) are driven by the intake rocker arm 38bi and the exhaust rocker arm 38be to open and close the relevant ports.

A timing chain 38e is wrapped around a driven sprocket 38c attached to a right end part of the cam shaft 38a and a driving sprocket 38d attached to the crankshaft 40, and the cam shaft 38a is thereby rotated at a speed reduction ratio of 1/2 in relation to the crankshaft 40.

In addition, the cylinder head 32 is fitted with a spark plug 39p having an electrode exposed into a combustion chamber 39, which is defined by a ceiling surface faced by a top surface of the piston 36.

In the crank chamber 40C, a left-right pair of crank webs 40w, 40w are contained while the crankshaft 40 is rotatably supported on left and right circular bearing holes of the unit case 21 through main bearings 41, 41. Of extension parts extending horizontally to the left and right sides, the right extension part is provided with an AC generator 42, whereas the left extension part is provided with a drive pulley 51 of the belt type non-stage transmission 50 together with a transmission driving mechanism 60.

The AC generator 43 is covered with a generator cover 28 on the right side.

Referring to FIG. 7, the left end of the crankshaft 40 is rotatably supported through a collar 54 onto an annular bearing part 24Fa of the transmission case cover 24 through a bearing 43.

A drive pulley 51 is composed of a fixed pulley half 51s and a movable pulley half 51d.

A left extension part ranging from a step part 40a reduced in diameter of the crankshaft 40 is fitted with a bearing 52, a guide sleeve 53, the fixed pulley half 51s and the collar 54 in this order from the right side. An inner ring of the bearing 52, the guide sleeve 53, a base part of the fixed pulley half 51s, and the collar 54 are fastened integrally to the crankshaft 40, by fastening to the left end face of the crankshaft 40 by a bolt 56 through a washer 55.

Therefore, the fixed pulley half 51s is fixed integrally with the crankshaft 40 in the state of being clamped between the guide sleeve 53 and the collar 54, and is rotated as one body with the crankshaft 40.

Incidentally, a cooling fan 51F is projectingly formed on the back surface (left side surface) of the fixed pulley half 51s.

On the other hand, the movable pulley half 51d opposed to the fixed pulley half 51s from the right side has a configuration in which a cylindrical movable pulley hub 51 dh as a base part thereof is partly spline-fitted to the guide sleeve 53 so that it is rotated as one body with the crankshaft 40 and is slidable in the axial direction.

Thus, the movable pulley half 51d disposed on the right side and facing the fixed pulley half 51s disposed on the left side is rotated together with the crankshaft 40, and it can be slid in the axial direction toward and away from the fixed pulley half 51s. A V-belt 58 is clampedly wrapped between tapered surfaces of the pulley halves 51s, 51d.

Referring to FIGS. 4 and 6, the transmission case 23 is so formed that its part on the rear side of the power unit hanger 21h of the transmission case part 23b formed on the left side relative to the left crankcase part 23a formed on the right side of a front part is largely bulging to the upper side, and a transmission electric motor 61 serving as a drive source of the transmission driving mechanism 60 is attached to an upper part of the bulging part 23e from the right side.

A gear cover member (not shown) is partly attached to the bulging part 23e of the transmission case 23 from the left side, and a first reduction gear shaft 63s and a second reduction gear shaft 65s are rotatably supported between the gear cover member and a wall surface of the transmission case 23. A drive gear 61a formed on a drive gear 61s of the transmission electric motor 61 is meshed with a large diameter gear 63a on the first reduction gear shaft 63s, and a small diameter gear 63b on the first reduction gear shaft 63s is meshed with a large diameter gear 65a on the second reduction gear shaft 65s (see FIG. 4).

On the other hand, a female screw member 67 is attached by a bolt 68 to a disk boss member 66 supported at its base end part on an outer ring of the bearing 52 fitted to the crankshaft 40, a flange part of the female screw member 67 is formed with a large diameter gear 67a, and the large diameter gear 67a is meshed with a small diameter gear 65b on the second reduction gear shaft 65s.

A cylindrical part 67s of the female screw member 67 is formed with a female screw (screw threads) at an inner peripheral surface thereof.

A male screw member 70 is supported through a bearing 69 fitted to the outer periphery of a movable pulley hub 51dh supporting the movable pulley half 51d and being slidable in the axial direction. A cylindrical part 70s of the male screw member 70 is located on the inside of a cylindrical part 67s of the female screw member 67, and a male screw formed at an outer peripheral surface of the cylindrical part 70s is meshed with the female screw formed at the inner peripheral surface of the cylindrical part 67s.

The male screw member 70 is so disposed that the left end of the cylindrical part 70s thereof is exposed to the left side relative to the left opening end of the cylindrical part 67s of the female screw member 67, and the flange part 70a is exposed in a centrifugal direction along a back surface of the movable pulley half 51d from the left end.

An annular member 71 is firmly attached to an outer peripheral part of the flange part 70a of the male screw member 70, a rear part of the annular member 71 extends rearwards and extends axially to the right side so as to come around to the outside of the large diameter part 67a of the female screw member 67, and the extension part 71a is clamped between an upper-lower pair of guide pieces 72, 72, projecting into the transmission chamber 50C, of the transmission case 23, whereby rotation of the extension part 71a is restricted and axial movement of the extension part 71a is guided (see FIG. 7).

Therefore, the male screw member 70 supported through the bearing 69 onto the movable pulley hub 51dh integral with the movable pulley half 51d is restricted in rotation by the guide pieces 72, 72 while being permitted to slide only in the axial direction.

In the transmission driving mechanism 60 configured as above, when the transmission electric motor 61 is driven and the drive gear 61a formed on the drive shaft 61s is rotated, the large diameter gear 63a of the first reduction gear shaft 63s meshed with the drive gear 61a is rotated together with the small diameter gear 63b with a speed reduction, the large diameter gear 65a on the second reduction gear shaft 65s meshed with the small diameter gear 63b is rotated together with the small diameter gear 65b with a further speed reduction, the large diameter gear 67a of the female screw member 67 meshed with the small diameter gear 65b is rotated with a further speed reduction, and the female screw member 67 is rotated.

When the female screw member 67 is rotated, the male screw member 70 meshed therewith is moved in the axial direction by a screw mechanism, since it is restricted in rotation.

The axial movement of the male screw member 70 causes an axial movement of the movable pulley hub 51dh as one body with the movable pulley half 51d through the bearing 69, whereby the movable pulley half 51d can be moved toward and away from the fixed pulley half 51s.

Incidentally, the movable pulley half 51d is moved in the axial direction while being rotated together with the crankshaft 40, since the movable pulley hub 51dh integrally supporting the movable pulley half 51d is spline fitted to the guide sleeve 53 integral with the crankshaft 40.

With the movable pulley half 51d thus moved toward and away from the fixed pulley half 51s by driving of the transmission electric motor 61 to rotate normally and reversely, the wrapping radius of the V-belt 58 wrapped between the opposed tapered surfaces of both the pulley halves 51 s, 51d is changed, whereby non-stage transmission is performed.

A starter motor 75 is disposed in the state of being attached to the right crankcase 22, on the rear lower side of the transmission electric motor 61 mounted to the bulging part 23e of the transmission case part 23b from the right side.

The starter motor 75 is mounted, from the left side, to a left side surface of the bulging part 22e bulging slightly rearwards on the right side of the right crankcase 22, the starter motor 75 being in such a posture as to have a drive shaft 75s set in the left-right direction in the same manner as and in parallel to that of the transmission electric motor 61 (see FIG. 5).

Referring to FIG. 5, which is a right side view, a reduction gear shaft 76s is rotatably supported between the drive shaft 75s of the starter motor 75 and the crankshaft 40, and a large diameter gear 76a integral with the reduction gear shaft 76s is meshed with the drive gear 75a formed on the drive shaft 75s.

On the other hand, adjacently to the AC generator 42 provided at the right end of the crankshaft 40, a driven gear 77 is fittedly supported on a rotary boss 78 rotatably supported on the crankshaft 40 (see FIG. 6), and the driven gear 77 is meshed with a small diameter gear 76b integral with the reduction gear shaft 76s.

Incidentally, a one-way clutch 79 is interposed between an outer rotor 42r, which is integral with the crankshaft 40, of the AC generator 42 and the rotary boss 78.

Therefore, when the starter motor 75 is driven and the drive gear 75a formed on the drive shaft 75s is rotated, the large diameter gear 76s on the reduction gear shaft 76s which is meshed with the drive gear 75a is rotated together with the small diameter gear 76b with speed reduction, the driven gear 77 meshed with the small diameter gear 76b is rotated together with the rotary boss 78 with a further speed reduction, and the rotation of the rotary boss 78 causes, through the one-way clutch 79, the outer rotor 42r of the AC generator 42 to rotate together with the crankshaft 40, whereby starting of the internal combustion engine 30 can be performed.

In addition, referring to FIG. 5, a balancer shaft 105 is rotatably supported on the upper side of the crankshaft 40 so that a balancer weight 105w is rotated between the left and right crank webs 40w, 40w, and a balancer driven gear 104 fitted on the balancer shaft 105 is meshed with a balancer drive gear 103 fitted on the crankshaft 40.

Therefore, by the balancer weight 105w rotated by and synchronously with the rotation of the crankshaft 40, vibrations attendant on the operation of the internal combustion engine 30 are suppressed.

Now, the structure of a rear part of the power unit 20 will be described below.

Referring to FIG. 6, a driven pulley 81 corresponding to the drive pulley 51 of the belt type non-stage transmission 50 is comprised of a fixed pulley half 81s and a movable pulley half 81d, which face each other and are both supported on a driven shaft 82.

The driven shaft 82 is rotatably supported on three portions, i.e., the transmission case 23 and the transmission case cover 24 and the reduction gear cover 25 through bearings 83, 84, 85, respectively.

Referring to FIG. 6, a left side part of the driven shaft 82 is formed with a small diameter part 82a slightly reduced in outer diameter from a step part. A bearing 86, a support sleeve 87 and a collar 88 are sequentially fitted on the small diameter part 82a, and a nut 89 is screw engaged with an end part of the small diameter part 82a and is tightened to integrally fasten these components.

The bearing 84 is interposed between an annular bearing part 24Ra of the transmission case cover 24 and the collar 88.

A base part of a cup-shaped clutch outer 91 of a centrifugal clutch 90 is securely attached to the support sleeve 87 so that the clutch outer 91 is rotated as one body with the driven shaft 82.

On the outer periphery of a part, which is covered with the transmission case cover 24 on the right side of the clutch outer 91, of the driven shaft 82, a cylindrical fixed pulley hub 95 supporting the fixed pulley half 81s is rotatably supported so that it can be rotated relatively to the driven shaft 82 through the interposition of the bearing 86 and a bearing 96 therebetween.

A support plate 92a, which is the clutch inner 92 of the centrifugal clutch 90, is fixed to the left end of the fixed pulley hub 95 by a nut 97.

A base end part of an arm 92c is rotatably supported on a pivotal shaft 92b of the support plate 92a, and a clutch shoe 92d is firmly attached to the tip of the arm 92c.

The arm 92c is urged by a spring 92e in such a direction that the clutch shoe 92d is urged away from the inner peripheral surface of the clutch outer 91.

At the outer periphery of the cylindrical fixed pulley hub 95 supporting the clutch inner 92, a cylindrical movable pulley hub 98 supporting the movable pulley half 81d is provided so as to be slidable in the axial direction.

More specifically, the cylindrical movable pulley hub 98 is provided with a guide hole 98a which is elongate along the axial direction, and a guide pin 99 projectingly provided on the fixed pulley hub 95 is slidably engaged with the guide hole 98a.

Therefore, the movable pulley hub 98 is restricted in rotation relative to the fixed pulley hub 95 by the guide pin 99, and, at the same time, can slide in the axial direction on the fixed pulley hub 95 while being guided by the guide hole 98a.

A coil spring 100 is interposed between the support plate 92a integrally attached to the fixed pulley hub 95 and the movable pulley hub 98, and the movable pulley hub 98 is urged rightwards by the coil spring 100.

With the above configuration, the movable pulley half 81 d supported on the movable pulley hub 98 is rotated together with the fixed pulley half 81s supported on the fixed pulley hub 95, is slidable in the axial direction, and is urged toward the fixed pulley half 81s by the coil spring 100.

The V-belt 58 is wrapped between the opposed tapered surfaces of the fixed pulley half 81s and the movable pulley hub 98, and the wrapping radius on the side of the driven pulley 81 is changed in conjunction with the wrapping radius on the side of the drive pulley 51 in a inverse proportional relationship, whereby non-stage transmission is performed.

When the rotating speed of the drive pulley 51 exceeds a predetermined rotating speed, the clutch shoe 92d of the clutch inner 92 in the centrifugal clutch 90 comes into contact with the inner peripheral surface of the clutch outer 91 to rotate as one body with the latter, whereby motive power is transmitted to the driven shaft 82.

On the right side of a rear part of the transmission case 23, covering with the reduction gear cover 25 is conducted to form the reduction gear chamber 110C for containing the reduction gear mechanism 110.

As shown in FIG. 4, both ends of a reduction gear shaft 112s is rotatably supported between a rear part of the transmission case 23 and the reduction gear cover 25 which face each other, through bearings 111, 111, and a large diameter gear 112a integral with the reduction gear shaft 112s is meshed with a small diameter gear 82g formed on the driven gear 82.

Similarly, the rear axle 114 is rotatably supported between a rear part of the transmission case 23 and the reduction gear cover 25 through bearings 113, 113, the rear axle 114 protrudes rightward from the bearing 113 on the right side, and a large diameter gear 114a integrally fitted on the rear shaft 114 is meshed with a small diameter gear 112b integral with the reduction gear shaft 112s.

The rear wheel 17 is fitted on a part, protruding rearwards from the reduction gear cover 25, of the rear axle 114.

Therefore, the rotation of the driven shaft 82 is transmitted to the rear wheel 17 with speed reduction through the reduction gear mechanism 110.

In the power transmission structure of the power unit 20 as above-described, a configuration for introducing a cooling airflow into the transmission chamber 50C defined by the transmission case 23 and the transmission case cover 24 so as to cool the belt type non-stage transmission 50 is provided at a front part of the transmission case cover 24.

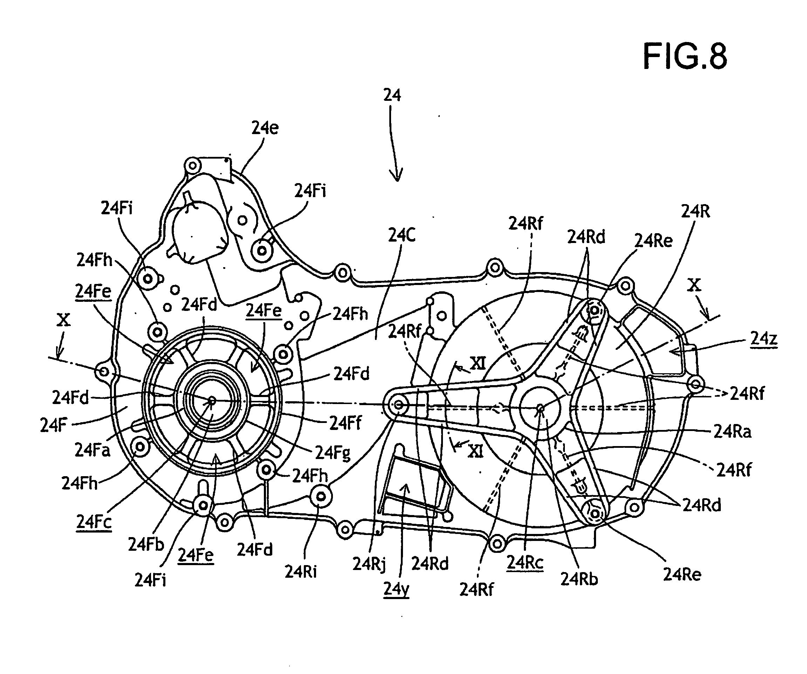

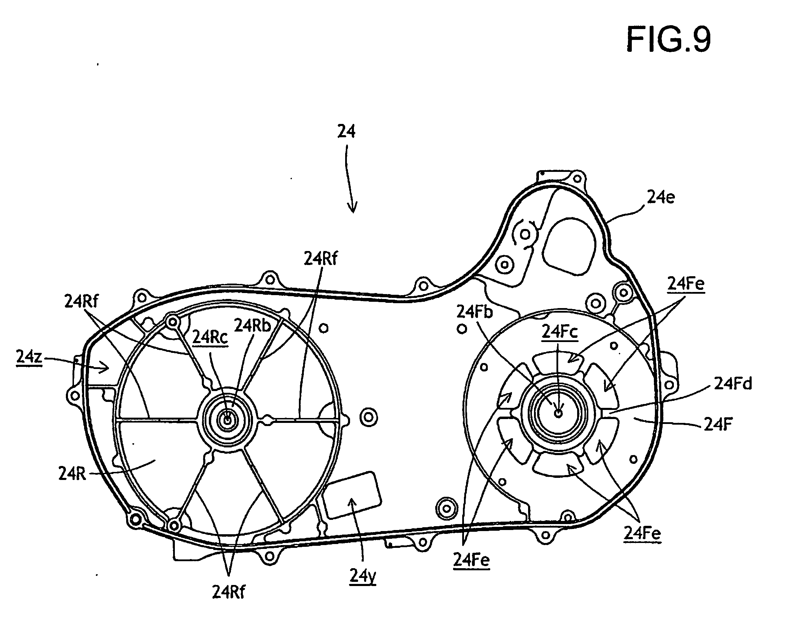

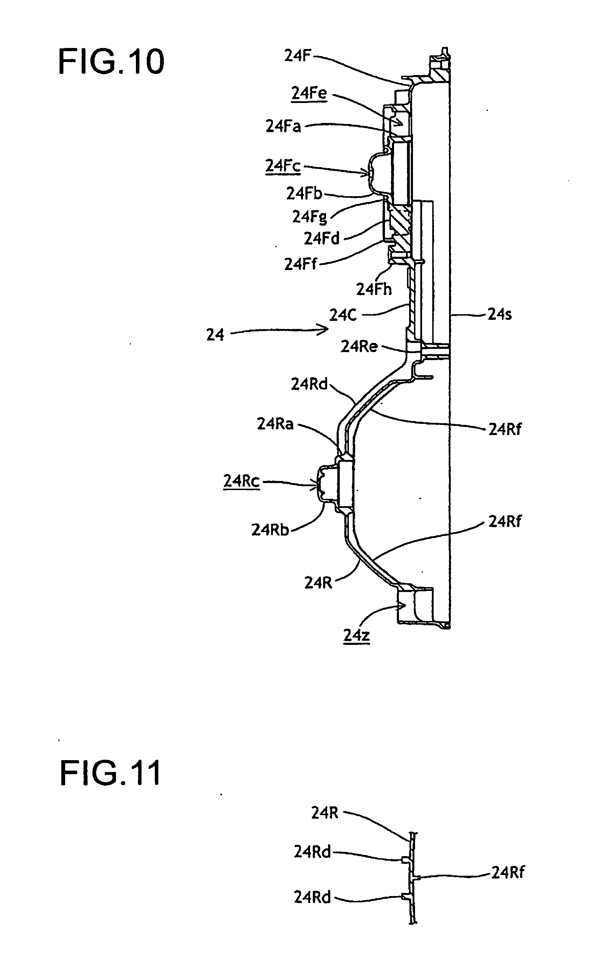

Of the transmission case cover 24, a left side view (outer side view) is shown in FIG. 8, a right side view (inner side view) is shown in FIG. 9, a sectional view is shown in FIG. 10, and a sectional view taken along line XI-XI of FIG. 8 is shown in FIG. 11.

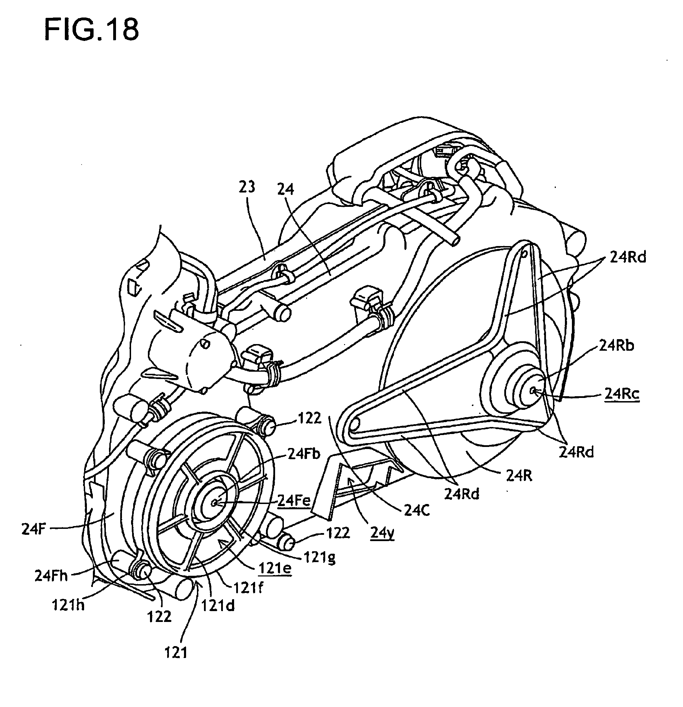

Incidentally, FIG. 18 showing a roughly rear half part of the power unit 20 shows the transmission case cover 24 together with the transmission case 23 in a perspective view.

Of the transmission case cover 24, a front part ranging from a mating surface 24s for mating to the transmission case 23 is slightly bulging to the left side (outer side) in a roughly circular flat plate-like shape to form a circular wall part 24F, and a rear half part is bulging in a dome-like shape to form a dome wall 24R (see FIGS. 10 and 18).

The circular wall part 24F on the front side covers the drive pulley 51, and the dome wall 24R on the rear side covers the centrifugal clutch 90 in a surrounding and containing manner.

Incidentally, the transmission case cover 24 is formed with a flat connecting wall 24C (see FIGS. 10 and 18) between the circular wall part 24F and the dome wall 24R both bulging to the outer side, and is formed, on the upper side of the circular wall part 24F at a front part thereof, with a building part 24e correspondingly to the building part 23e of the transmission case 23.

The above-mentioned bearing part 24Fa for supporting the left end of the crankshaft 40 through the bearing 43 is formed at a central part of the circular wall part 24F, and the above-mentioned annular bearing part 24Ra for supporting the left end of the driven shaft 82 through the bearing 84 is formed at an apex part of the dome wall 24R.

Of the annular bearing part 24Fa at a central part of the circular wall part 24, an inner-side side wall is bulging to the axially outer side to form a small cup-shaped bulging wall 24Fb for covering an end of the crankshaft 40, and a small diameter vent hole 24Rc is bored in the center of the bulging wall 24Rb.

The circular wall part 24F at the outer periphery of the annular bearing part 24Fa on the front side is boredly provided with six sector-shaped cooling airflow inlet ports 24Fe, leaving six connecting ribs 24Fd in a radial pattern.

In other words, the annular bearing part 24Fa is supported by the six connecting ribs 24Fd.

The cooling airflow inlet ports 24Fe formed at the outer periphery of the annular bearing part 24Fa are openings for introducing a cooling airflow into the transmission chamber 50C.

Two of the six connecting ribs 24Fd are located on a straight line passing through the front and rear vent holes 24Fc, 24Rc in side view.

In other words, the front and rear two connecting ribs 24Fd are formed on a plane S containing the crankshaft 40, which is the drive shaft of the belt type non-stage transmission 50, and the driven shaft 82 (see FIG. 3)

Therefore, it is possible to secure the rigidity in the front-rear direction of the transmission case cover 24, which receives a force generated due to turning of the V-belt 58, and to reduce vibration.

Along the outer peripheral edges and the inner peripheral edges of the six sector-shaped cooling airflow inlet ports 24Fe, an outer ring projected part 24Ff and an inner ring projected part 24Fg both being annular are slightly projected to the left side.

The outer ring projected part 24Ff and the inner ring projected part 24Fg are provided at the outer periphery of the bulging wall 24Fb.

Four holder attaching bosses 24Fh for attaching a filter holder 121 are formed at the outer periphery of the outer ring projected part 24Ff.

Incidentally, cover attaching bosses 24Fi are formed at a total of three positions, namely, upper front and rear two positions and one lower position, of the circular wall part 24F.

On the other hand, the dome wall 24R at the outer periphery of the annular bearing part 24Ra on the rear side is provided on a left side surface (outer side surface) thereof with three U-shaped outside ribs 24Rd extending in U shape radially from the annular bearing part 24Ra provided at the center.

Specifically, each of the U-shaped outside ribs 24Rd has a U shape in which a pair of substantially parallel side edges are extended in a centrifugal direction from the annular bearing part 24Ra, are curved at their tips, and the curved tips are connected to each other.

The three U-shaped outside ribs 24Rd are at regular angular intervals, and base end parts of the adjacent U-shaped outside ribs 24Rd are connected to each other at the annular bearing part 24Ra.

One of the U-shaped outside ribs 24Rd extends forwards from the annular bearing part 24Ra substantially in parallel to the straight line passing through the front and rear vent holes 24Fc and 24Rc in side view, and a curved part at its tip reaching the center of the transmission case cover 24 is formed with a cover attaching boss 24Rj for attaching the transmission case cover 24 to the transmission case 23 (see FIG. 8).

The one pair of side edges of the U-shaped outside rib 24Rd extending forwards are so formed that they are substantially parallel to the plane S containing the drive shaft (crankshaft 40) of the belt type non-stage transmission 50 and the driven shaft 82 and are at substantially equal distances from the plane S, in side view shown in FIG. 3.

Therefore, the rigidity in the front-rear direction of the dome wall 24R of the transmission case cover 24 is particularly enhanced, whereby vibrations in the front-rear direction due to the turning of the V-belt 58 of the belt type non-stage transmission 50 can be suppressed more effectively.

The other two U-shaped outside ribs 24Rd extend from the annular bearing part 24Ra toward the rear upper side and the rear lower side at an angle of about 120 degrees in relation to the U-shaped outside rib 24Rd extending in the front-rear direction, and the curved tip parts of the outside ribs are formed with cover attaching bosses 24Ri, respectively.

Therefore, the rigidity of the dome wall 24R as a whole can be enhanced by a small number of ribs.

Incidentally, the connecting wall 24C is formed with a cover attaching boss 24Ri at a position of a lower part thereof.

In addition, a right side surface (inner side surface) of the dome wall 24R is formed with six inside ribs 24Rf extending radially from the annular bearing part 24Ra provided at the center.

The six inside ribs 24Rf are formed at regular angular intervals around the annular bearing part 24Ra, and, of them, the two inside ribs 24Rf extending in the front-rear direction are located on a straight line passing through the front and rear vent holes 24Fc and 24Rc in side view.

Therefore, three of the six inside ribs 24Rf are substantially parallel to the three U-shaped outside ribs 24Rd on the outer side surface, respectively; in side view shown in FIG. 8, the inside ribs 24Rf are each located between the side edges ribs forming the U shape of the U-shaped outside rib 24Rd so as not to overlap with the latter.

Thus, the dome wall 24R on the rear side of the transmission case cover 24 is provided on its outer side surface with the three U-shaped outside ribs projected and extending radially, and is provided on its inner side surface with the six inside ribs 24Rf projected and extending radially. Therefore, the rigidity of the dome wall 24R is remarkably enhanced by the synergistic effect of the U-shaped outside ribs 24Rd and the inside ribs 24Rf, so that vibrations of the dome wall 24R can be suppressed by a small number of simple ribs.

Incidentally, the dome wall 24R of the transmission case cover 24 is provided with a cooling airflow outlet passage 24y in a lower part at the center in the front-rear direction, and is provided with a cooling airflow outlet passage 24z in a rear upper part.

The condition where the transmission case cover 24 as above is laid over the transmission case 23 in the manner of covering the belt type non-stage transmission 50 is shown in FIG. 3.

Of the circular wall part 24F on the front side of the transmission case cover 24, an annular part which is provided with the six cooling airflow inlet ports 24Fe between the outer ring projected part 24Ff and the inner ring projected part 24Fg is fitted with a hollow circular disk-shaped filter element 120, and the filter element 120 is pressed by the filter holder 121 from the outside, whereby the filter element 120 is attached to the cooling airflow inlet ports 24Fe.

The filter holder 121 is composed mainly of an outer ring part 121f and an inner ring part 121g fitted respectively to the outer ring projected part 24Ff and the inner ring projected part 24Fg of the transmission case cover 24, and six connecting ribs 121d extending radially from the inner ring part 121g to be connected to the outer ring part 121f; in addition, bolt boss parts 121h are extended radially from four positions of the outer ring part 121f.

Of the filter holder 121, the six connecting ribs 121d are opposed to the six connecting ribs 24Fd of the transmission case cover 24; therefore, the filter holder 121 is provided with cooling airflow inlet ports 121e correspondingly to the six sector-shaped cooling airflow inlet ports 24Fe of the transmission case cover 24.

In installing the filter holder 121, the outer ring part 121f and the inner ring part 121g of the filter holder 121 are fitted and connected respectively to the outer ring projected part 24Ff and the inner ring projected part 24Fg of the transmission case cover 24, the six connecting ribs 24Fd of the filter holder 121 are pressed toward the six connecting ribs 24Fd of the transmission case cover 24 so as to clamp the filter element 120 therebetween, and the bolt boss parts 121h are laid on the holder attaching bosses 24Fh at four positions of the outer periphery and are fastened in situ by bolts 122.

Thus, the six cooling airflow inlet ports 121e of the filter holder 121 and the filter element 120 are disposed at the outer periphery of the bulging wall 24Fb bulging from the annular baring part 24Fa of the transmission case cover 24 so as to cover an end of the crankshaft 40, and the six cooling airflow inlet ports 24Fe of the transmission case cover 24 are formed at the outer periphery of the annular bearing part 24Fa. The six cooling airflow inlet port 24Fe are located to face a cooling fan 51F provided on the back side of the fixed pulley half 51s fixed to the crankshaft 40.

Therefore, under the action of the cooling fan 51F rotated as one body with the crankshaft 40, a cooling airflow from the outside of the filter holder 121 flows sequentially through the cooling airflow inlet ports 121e, the filter element 120 and the cooling airflow inlet ports 24Fe, and, in the filtered state, is introduced into the transmission chamber 50C.

The inner-side side wall of the annular bearing part 24Fa, rotatably supporting an end part of the crankshaft 40 through the bearing 43, of the transmission case cover 24 is bulging to the axially outer side to form the bulging wall 24Fb covering the end of the crankshaft 40. By the bulging wall 24Fb, therefore, the cooling airflow taken in is straightened at the outer periphery of the bulging wall 24Fb and is smoothly guided into the cooling airflow inlet ports 24Fe at the outer periphery of the annular bearing part 24Fa, to be introduced into the transmission chamber 50C, so that the quantity of the cooling air introduced into the belt type non-stage transmission 50 can be increased.

The cooling airflow introduced into the transmission chamber 50C flows rearwards while cooling the belt type non-stage transmission 50, and is discharged through the cooling airflow outlet passage 24z at a rear part of the transmission case cover 24.

Of the transmission case cover 24, a substantially front half part is covered with the front-side side cover 26 on the lateral side, and a substantially rear half part is covered with a rear-side side cover 27 on the lateral side, so that the cooling airflow inlet ports 121e, 24Fe are covered with the front-side side cover 26.

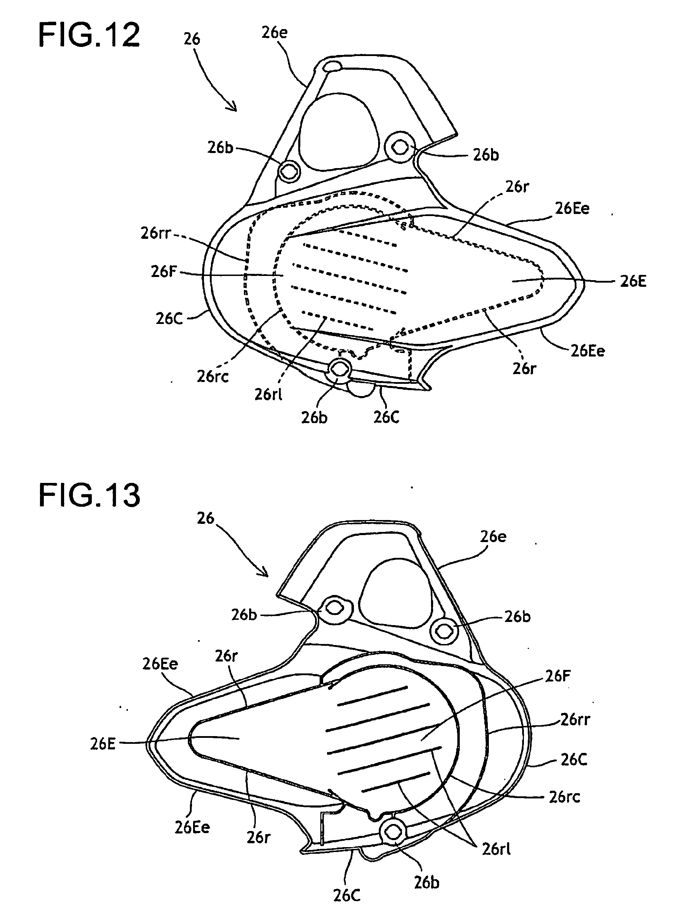

As shown in FIGS. 12 and 13, the front-side side cover 26 forms a front-side wall part 26F corresponding to the circular wall part 24F of the transmission case cover 24, and forms on the upper side thereof a bulging part 26e bulging correspondingly to the bulging part 24e of the transmission case cover 24; besides, an extension part 26E is formed which extends rearwards from the front-side wall part 26F at an acute angle while being gradually reduced in vertical width.

The front-side wall part 26F has a peripheral wall 26C covering the transmission case cover 24 from the front side to the lower side of the latter (see FIGS. 6 and 7).

Upper and lower side edges 26Ee forming an acute angle of the extension part 26E are slightly bent to the inner side (right side) until they intersect each other at their rear ends.

Front-side cover ribs 26r are projectingly formed on the inner surface (right side surface) of the extension part 26E.

As shown in FIG. 13, the front-side cover ribs 26r are formed in a tapered form at an acute angle substantially in parallel to the upper and lower side edges 26Ee.

The upper and lower cover ribs 26r formed in the tapered form constitutes an arcuate rib part 26rc which extends forwards to be connected to the inner surface of the front-side wall part 26F while forming a large circular arc.

Therefore, the front-side cover ribs 26r form a single closed loop, and the rib arcuate part 26rc of the front-side wall part 26F is disposed at such a position as to surround the outer periphery of the annular outer ring projected part 24Ff, fitted with the filter element 120 on the front side, of the transmission case cover 24.

In addition, on the inner surface of the front-side wall part 26F of the front-side side cover 26, a second front-side cover rib 26rr is projectingly formed so as to further externally surround the rib arcuate part 26rc. Besides, in the inside of the rib arcuate part 26rc, five parallel rectilinear straightening ribs 26rl are projectingly formed in the state of extending slightly forwardly upwards rather than extending horizontally.

Incidentally, the front-side side cover 26 is formed with attaching boss parts 26b at a total of three positions, upper front and rear portions and a lower portion of the front-side wall part 26F.

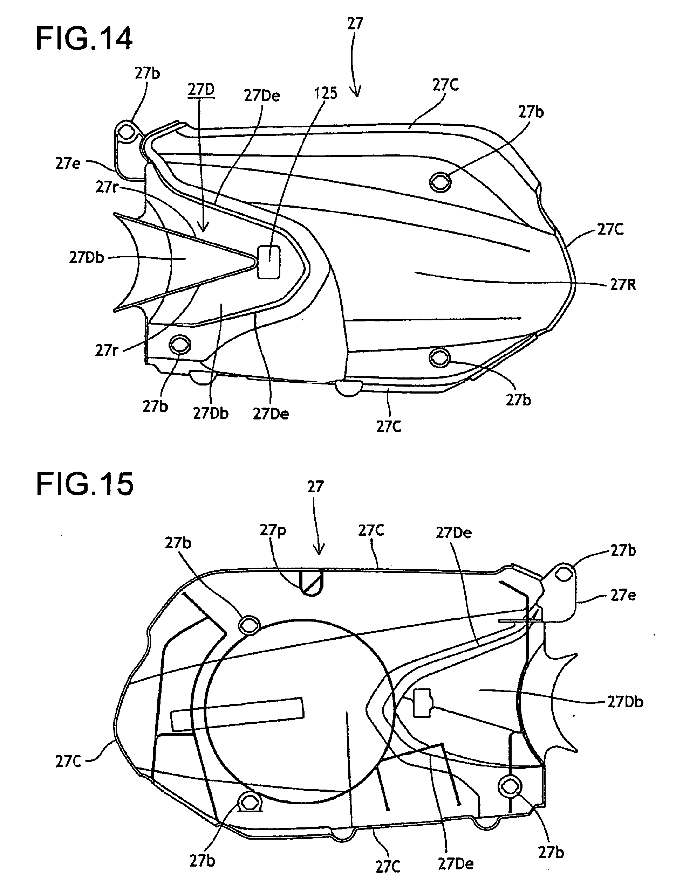

On the other hand, referring to FIGS. 14, 15 and 17 (and, further, FIG. 6), the rear-side side cover 27 covering a substantially rear half part of the transmission case cover 24 is composed of rear side wall parts 27R covering the connecting part 24C and the rear-side dome wall 24R of the transmission case cover 24 on the lateral side, and peripheral walls 27C covering the connecting part 24C and the rear-side dome wall 24R on the upper side through the rear side to the lower side. In addition, a central part in the vertical direction of a front part of the rear side wall parts 27R is formed with a recessed part 27D recessed to the side of the connecting part 24C of the transmission case cover 24.

The recessed part 27D of the rear-side side cover 27 is so shaped that its bent edges 27De at the boundary of recessing from the rear side wall parts 27R have the same shapes (for overlapping) as the upper and lower side edges 26Ee of the extension part 26E, extending rearwards at an acute angle while being gradually reduced in vertical width, of the front-side side cover 26.

Therefore, the recessed part 27D of the rear-side side cover 27 has its upper and lower bent edges 27De extending rearwards at an acute angle while being gradually reduced in vertical width, to intersect at their rear ends.

On an outer surface (left side surface) of a bottom wall 27Db of the recessed part 27D, rear-side cover ribs 27r are projectingly formed.

As shown in FIG. 14, the rear-side cover ribs 27r are formed in a tapered overall shape at an acute angle, to be substantially parallel to the upper and lower bent edges 27De.

The upper and lower rear-side cover ribs 27r formed in the tapered overall shape intersect at their rear ends, while their front ends protrude slightly forward beyond the front end of the rear-side wall part 27R while opening wider.

A rectangular parallelopiped elastic body 125 is securely attached to the bottom wall 27Db in abutment, from the rear side, on the intersecting rear ends of the upper and lower rear-side cover ribs 27r.

In addition, on the inner surface (right side surface) of the rear-side side cover 27, an opening support part 27p for supporting a tip opening part of a breather pipe is formed at a required position along the upper-side peripheral wall 27C, in the shape of a trough which opens to the right side while having the peripheral wall 27C as a ceiling surface and which extends leftwards.

Incidentally, the rear-side side cover 27 is formed with attaching boss parts 27b at a total of four positions, namely, at upper and lower positions of rear parts of the rear side wall parts 27R, at a lower position of the rear-side cover ribs 27r of front parts of the rear side wall parts 27R, and at a bracket 27e extending slightly forwards beyond the front parts of the rear side wall parts 27R.

The rear-side side cover 27 is put on a side surface of a substantially half part of the transmission case cover 24, and the attaching boss parts 27b at three portions consisting of upper and lower portions of a rear part and a front lower portion of the rear-side side cover 27 are fastened to cover attaching bosses 24Ri of the transmission case cover 24 by bolts 27B, whereby the rear-side side cover 27 is attached. Thereafter, the front-side side cover 26 is put on a side surface of a substantially front half part of transmission case cover 24, whereon the rearward extension part 26E of the transmission case cover 24 is coveringly laid over the recessed part 27D of the rear-side side cover 27, and, in this condition, the attaching boss parts 26b at three portions are fastened to cover attaching bosses 24Fi of the transmission case cover 24 by bolts 26B, whereby the front-side side cover 26 is attached (see FIG. 2).

Incidentally, the attaching boss part 26b at an upper rear portion of the front-side side cover 26 is co-fastened to the cover attaching boss 24Fi of the transmission case cover 24 by the bolt 26B, which is commonly used also for the attaching boss part 27b at an upper front portion of the rear-side side cover 27.

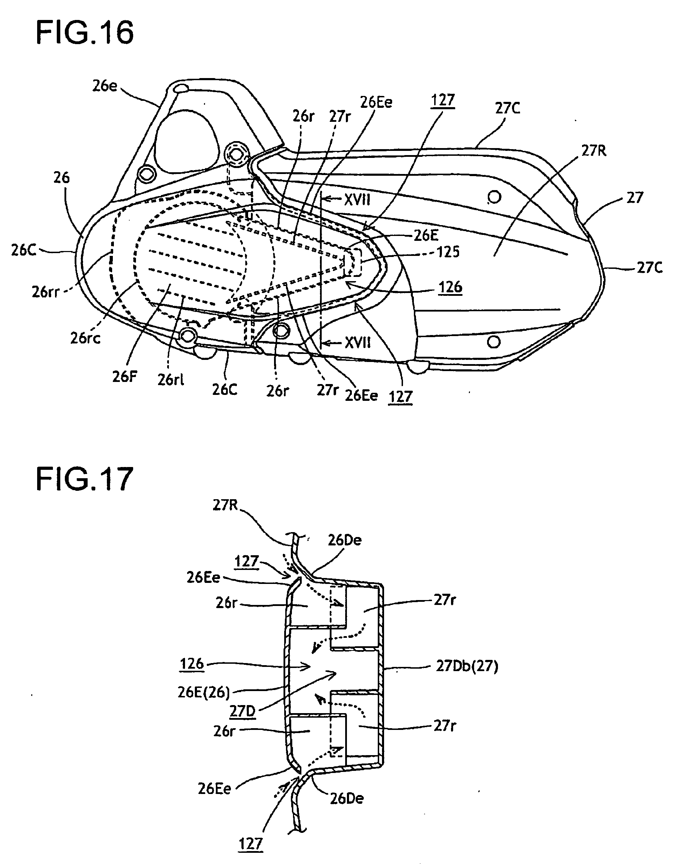

A side view of the condition where the front-side side cover 26 and the rear-side side cover 27 are overlapping each other at the extension part 26E and the recessed part 27D is shown in FIG. 16, and a sectional view of an essential part thus overlapping is shown in FIG. 17.

A cooling airflow intake passage 126 is formed between the rearward extension part 26E of the front-side side cover 26 and the recessed part 27D of the rear-side side cover 27 overlapping therewith.

In the cooling airflow intake passage 126, the tapered front-side cover ribs 26r of the front-side side cover 26 are located on the outside of and substantially in parallel to the tapered rear-side cover ribs 27r of the rear-side side cover 27. Therefore, the rear-side cover ribs 27r are surrounded by and on the inside of the front-side cover ribs 26r which form a closed loop together with the rib arcuate part 26rc (see FIG. 16).

The connected part of the intersecting rear ends of the upper and lower front-side cover ribs 26r formed in the tapered overall shape is abutted on the elastic body 125 secured to the recessed part bottom wall 27Db of the rear-side side cover 27, whereby the front-side cover ribs 26r are positioned at a predetermined distance from the recessed part bottom wall 27Db. Simultaneously, the upper and lower side edges 26Ee of the extension part 26E of the front-side side cover 26 are positioned so as to form cooling airflow intake gaps 127 between them and the upper and lower bent edges 27De constituting the recessed part 27D of the rear-side side cover 27 (see FIG. 17).

Similarly, the rear-side cover ribs 27r are positioned at a predetermined distance from the extension part 26E of the front-side side cover 26 (see FIG. 17).

Therefore, the cooling airflow intake gaps 127 are elongately formed along the upper and lower side edges 26Ee extended in a tapered overall shape at an acute angle toward the rear side of the extension part 26E of the front-side side cover 26, and the cooling airflows are taken in through the cooling airflow intake gaps 127 into the cooling airflow intake passage 126 as indicated by broken lines in FIG. 17.

The front-side cover ribs 26r and the rear-side cover ribs 27r are projected into the cooling airflow intake passage 126 to form a labyrinth, so that the cooling airflows taken in through the cooling airflow intake gaps 127 can pass smoothly through the cooling airflow intake passage 126 while being each guided sequentially by the front-side cover rib 26r and the rear-side cover rib 27r.

In this manner, the cooling airflows being guided through the cooling airflow intake passage 126 by the front-side cover ribs 26r and the rear-side cover ribs 27r flow forwards through the inside of the front-side side cover 26 while being straightened by the straightening ribs 26rl, to reach the lateral sides of the filter element 120 disposed at the cooling airflow inlet ports 24Fe of the transmission case cover 24. Therefore, the cooling airflows are permitted to flow efficiently through the filter element 120, to be introduced through the cooling airflow inlet ports 24Fe into the transmission chamber 50C.

The cooling airflow introduced into the transmission chamber 50C flows rearwards while cooling the belt type non-stage transmission 50, and is discharged through the cooling airflow outlet passage 24y at a central lower part of the transmission case cover 24 and the cooling airflow outlet passage 24z on the rear side thereof.

Thus, the recessed part 27D recessed to the side of the transmission case cover 24 is formed at a front part of the rear-side side cover 27, the extension part 26E extended rearwards in a tapered form at a rear part of the front-side side cover 26 is coveringly laid over the recessed part 27D externally, the cooling airflow intake gaps 127 are formed along the side edges 26Ee of the extension part 26E between the side edges 26Ee and the bent edges 27De of the rear-side side cover 27, and the cooling airflow intake passage 126 is formed between the extension part 26E and the recessed part 27D, so that the cooling airflow intake passage 126 can be formed without making the front-side side cover 26 to have a box cover shape. Therefore, the front-side side cover 26 is not projectingly provided on the transmission case cover 24, the power unit 20 can be suppressed in left-right width (width in the crankshaft direction), and the power unit 20 can be restrained from being enlarged in size.

The extension part 26E of the front-side side cover 26 is substantially flat plate-like in shape, and is coveringly laid on the recessed part 27D of the rear-side side cover 27, to form the cooling airflow gaps 127 between the side edges 26Ee of the extension part 26E and the bent edges 27De of the recessed part 27D. As shown in FIG. 17, therefore, the outside surface of the extension part 26E and the outside surface of the rear side wall parts 27R in the periphery of the recessed part 27D of the rear-side side cover 27 are substantially flush with each other, and no large undulation is present at the boundary between the two members, so that a feeling of unity of the power unit 20 as a whole in appearance can be easily obtained, and the appearance can be improved.

Into the cooling airflow intake passage 126 formed between the extension part 26E of the front-side side cover 26 and the recessed part 27D of the rear-side side cover 27, the front-side cover ribs 26r and the rear-side cover ribs 27r are projected substantially in parallel to the side edges 26Ee of the extension part 26E. Therefore, the cooling airflows taken in through the cooling airflow intake gaps 127 formed along the side edges 26Ee of the extension part 26E passes through the labyrinth defined by the front-side cover ribs 26r and the rear-side cover ribs 27r in the cooling airflow intake passage 126, whereby it is possible to prevent muddy water or foreign matter from penetrating to the depth relative to the cooling airflow intake passage 126.

The front-side cover ribs 26r are provided between the side edges 26Ee of the extension part 26E and the rear-side cover ribs 27r. Therefore, the cooling airflows taken in through the cooling airflow intake gaps 127 are each guided sequentially by the front-side cover rib 26r and the rear-side cover rib 27r, as indicated by broken lines in FIG. 17. Accordingly, the flow passage does not include any blind alley, so that the cooling airflows can pass smoothly through the cooling airflow intake passage 126 without stagnating, whereby the quantity of the cooling air taken in can be increased.

Since the extension part 26E of the front-side side cover 26 is extended rearwards in a tapered shape at an acute angle while being gradually decreased in vertical width, the cooling airflow intake gaps 127 formed along the upper and lower side edges 26Ee of the extension part 26E are also formed in a tapered shape while being bent at an acute angle. Therefore, with the side cover restricted in vertical width, the distance of the cooling airflow intake gaps 127 can be secured to be large, whereby the quantity of cooling air taken in can be increased, and the cooling capability can be enhanced thereby.

The filter element 120 is interposed at the cooling airflow inlet ports 24Fe of the transmission case cover 24, and the front-side cover ribs 26r are extended forwards and formed with the rib arcuate part 26rc so as to surround the outer periphery of the filter element 120. Therefore, the cooling airflows entering the inside of the front-side cover ribs 26r constituting a closed loop can be efficiently guided into the filter element 120 and be introduced into the transmission chamber 40C through the filter element 120, whereby the efficiency of cooling the belt type non-stage transmission 50 can be enhanced.

Since the second front-side cover ribs 26rr are formed so as to further externally surround the rib arcuate part 26rc, surrounding the outer periphery of the filter element 120, of the front-side cover ribs 26r, the noise leaking to the exterior through the cooling airflow passage can be reduced by the double structure of the ribs 26rc and 26rr.

In the above-described embodiment, a structure has been adopted in which the extension part 26E of the front-side side cover 26 is substantially flat plate-like in shape and is coveringly stacked on the recessed part 27D of the rear-side side cover 27. However, a structure may be adopted in which a recessed part recessed to the transmission case cover side is formed at a rear part of the front-side side cover, an extension part extending forwards is formed at a front part of the rear-side side cover, and the extension part of the rear-side side cover is coveringly put on the recessed part of the front-side side cover from the outer side. With the cooling airflow intake gaps formed between the side edges of the extension part and the rear-side side cover and with the cooling airflow intake passage formed between the extension part and the recessed part, the power unit can be restrained from being enlarged in size, without projecting the rear-side side cover on the transmission case cover and while suppressing the width of the power unit in the crankshaft direction. In addition, undulation at the boundary of the rear-side side cover relative to the transmission case cover is reduced, whereby a feeling of unity of the power unit as a whole can be easily obtained, and the appearance can be improved.

### MAIN REFERENCE SYMBOLS

20 power unit, 21 unit case, 22 right unit case, 23 transmission case, 24 transmission case cover, 24Fa annular bearing part, 24Fb bulging wall, 24Fd connecting rib, 24Fe cooling airflow inlet port, 24R dome wall, 24z cooling airflow inlet passage,
26 front-side side cover, 26F front-side wall part, 26E extension part, 26r front-side cover rib, 26rc rib arcuate part, 26rr second front-side cover rib;
27 rear-side side cover, 27R rear side wall part, 27D recessed part, 27r rear-side cover rib,
30 internal combustion engine, 40 crankshaft, 50 belt type non-stage transmission, 50C transmission chamber, 51 drive pulley, 51F cooling fan,
120 filter element, 121 filter holder, 126 cooling airflow inlet passage, 127 cooling airflow intake gap.

## Claims

1. A power unit (20) to be mounted on a motorcycle (1) comprising an internal combustion engine (30) and a belt-type non-stage transmission (50) having a cooling structure, said belt-type non-stage transmission (50) being provided on a lateral side of a transmission case (23) serving also as a crankcase for rotatably supporting a crankshaft (40) of the internal combustion engine (30), a transmission case cover (24) being disposed on said transmission case (23) from a lateral side so as to cover said belt-type non-stage transmission (50) and to form a transmission chamber (50C),
wherein a drive pulley (51), including a movable pulley half (51d) and a fixed pulley half (51s) provided at said crankshaft (40), is provided with a cooling fan (51F) at said fixed pulley half (51s) on the side of the transmission case cover (24);
said transmission case cover (24) being provided with a cooling airflow inlet port (24Fe) for introducing a cooling airflow into said transmission chamber (50C), at its part to which said cooling fan (51F) is opposed;
a substantially front half part of said transmission case cover (24) being covered with a front-side side cover (26) from a lateral side, and a substantially rear half part of said transmission case cover (24) being covered with a rear-side side cover (27) from a lateral side;
a first one (26) of said side covers (26, 27) being provided at an end part thereof with an extension part (26E) extending towards the other side cover (27) and being coveringly disposed on said other side cover (27) from an outer lateral side, whereby a cooling airflow intake gap (127) is formed between said extension part (26E) and said other side cover (27) along a side edge of said extension part (26E), and a cooling airflow intake passage (126) is formed adjacent said extension part (26E);
**characterized in that**
said other side cover (27) in an end part thereof facing said end part of the first side cover (26) is provided with a recessed part (27D) which is recessed toward the side of the transmission case cover (24); and
the extension part (26E) of said first side cover (26) is coveringly disposed on said recessed part (27D) of the other side cover (27) whereby the cooling airflow intake passage (126) is formed between said extension part (26E) and said recessed part (27D);
said cooling airflow intake passage (126) being provided with a front-side cover rib (26r) projecting from said extension part (26E) toward a bottom wall of said recessed part (27D) of said other side cover (27), substantially in parallel to a side edge of said extension part (26E) of said first side cover (26), and is provided with a rear-side cover rib (27r) projecting in parallel to said front-side cover rib (26r) from said bottom wall of said recessed part (27D) toward said extension part (26E).

2. The power unit as set forth in claim 1, wherein said front-side cover rib (26r) is provided between a side edge of said extension part (26E) and said rear-side cover rib (27r).

3. The power unit as set forth in claim 2, wherein said extension part (26E) of said first side cover (26) is extended rearwards while being tapered at an acute angle and with its vertical width gradually decreased.

4. The power unit as set forth in any one of claims 1 to 3, wherein a filter element (120) is interposed at said cooling airflow inlet port (24Fe) of said transmission case cover (24), and
said front-side cover rib (26r) is formed with a rib arcuate part (26rc) extending forwards so as to surround the outer periphery of said filter element (120).

5. The power unit as set forth in claim 4, wherein a second front-side cover rib (26rr) is formed so as to surround further externally said rib arcuate part (26rr), surrounding the outer periphery of said filter element (120), of said front-side cover rib (26r).

6. A power unit according to any of the preceding claims, wherein said first side cover is the front-side side cover (126) and the extension part (26E) thereof extends rearwards; the rear-side side cover (27) being provided with a recessed part (27D) in a front part thereof.

7. A power unit according to any of claims 1 to 5, wherein said first side cover is the rear-side side cover (27) and the extension part thereof extends forwards; the front-side side cover (26) being provided with a recessed part in a rear part thereof.

## Patentansprüche

1. Antriebseinheit (20) zum Befestigen an einem Motorrad (1), umfassend eine Brennkraftmaschine (30) und ein stufenloses Riemengetriebe (50) mit einer Kühlungsstruktur, wobei das stufenlose Riemengetriebe (50) an einer lateralen Seite eines Getriebegehäuses (23) vorgesehen ist, welches auch als ein Kurbelgehäuse zum drehbaren Lagern einer Kurbelwelle (40) der Brennkraftmaschine (30) dient, wobei eine Getriebegehäuseabdeckung (24) an dem Getriebegehäuse (23) von einer lateralen Seite her angeordnet ist, um das stufenlose Riemengetriebe (50) abzudecken und eine Getriebekammer (50C) zu bilden,
wobei eine Antriebsscheibe (51), welche eine bewegliche Scheibenhälfte (51d) und eine feste Scheibenhälfte (51s) umfasst, die an der Kurbelwelle (50) vorgesehen sind, mit einem Kühlgebläse (51 F) an der festen Scheibenhälfte (51s) an der Seite der Getriebegehäuseabdeckung (24) bereitgestellt ist,
wobei die Getriebegehäuseabdeckung (24) an ihrem Abschnitt, welcher dem Kühlgebläse (51 F) gegenüberliegt, mit einem Kühlungsluftstrom-Eingangsanschluss (24Fe) zum Einführen eines Kühlungsluftstroms in die Gehäusekammer (50C) bereitgestellt ist,
wobei ein im Wesentlichen vorderer halber Abschnitt der Getriebegehäuseabdeckung (24) mit einer Vorderseiten-Seitenabdeckung (26) von einer lateralen Seite her abgedeckt ist, und ein im Wesentlichen hinterer halber Abschnitt der Getriebegehäuseabdeckung (24) mit einer Hinterseiten-Seitenabdeckung (27) von einer lateralen Seite her abgedeckt ist,
wobei eine erste (26) der Seitenabdeckungen (26, 27) an einem Endabschnitt davon bereitgestellt ist, wobei sich ein Erstreckungsabschnitt (26E) in Richtung zu der anderen Seitenabdeckung (27) hin erstreckt und abdeckend an der anderen Seitenabdeckung (27) von einer äußeren lateralen Seite her angeordnet ist, wobei ein Kühlungsluftstrom-Einlassspalt (127) zwischen dem Erstreckungsabschnitt (26E) und der anderen Seitenabdeckung (27) entlang einem Seitenrand des Erstreckungsabschnitts (26E) gebildet ist, und wobei eine Kühlungsluftstrom-Einlasspassage (126) zu dem Erstreckungsabschnitt (26E) benachbart gebildet ist,
**dadurch gekennzeichnet, dass** die andere Seitenabdeckung (27) an einem Endabschnitt davon, welcher dem Endabschinitt der ersten Seitenabdeckung (26) zugewandt ist, mit einem zurückgenommenen Abschnitt (27D) bereitgestellt ist, welcher zu der Seite der Getriebegehäuseabdeckung (24) hin zurückgenommenen ist, und
wobei der Erstreckungsabschnitt (26E) der ersten Seitenabdeckung (26) abdeckend an dem zurückgenommenen Abschnitt (27D) der anderen Seitenabdeckung (27) angeordnet ist, wodurch die Kühlungsluftstrom-Einlasspassage (126) zwischen dem Erstreckungsabschnitt (26E) und dem zurückgenommenen Abschnitt (27D) gebildet ist,
wobei die Kühlungsluftstrom-Einlasspassage (126) mit einer Vorderseiten-Abdeckrippe (26r) bereitgestellt ist, welche von dem Erstreckungsabschnitt (26E) zu einer Bodenwand des zurückgenommenen Abschnitts (27D) der anderen Seitenabdeckung (27) hin im Wesentlichen parallel zu einem Seitenrand des Erstreckungsabschnitts (26E) der ersten Seitenabdeckung (26) vorsteht, und mit einer Hinterseiten-Abdeckrippe (27r) bereitgestellt ist, welche parallel zu der Vorderseiten-Abdeckrippe (26r) von der Bodenwand des zurückgenommenen Abschnitts (27D) zu dem Erstreckungsabschnitt (26E) hin vorsteht.

2. Antriebseinheit nach Anspruch 1, wobei die Vorderseiten-Abdeckrippe (26r) zwischen einem Seitenrand des Erstreckungsabschnitts (26E) und der Hinterseiten-Abdeckrippe (27r) bereitgestellt ist.

3. Antriebseinheit nach Anspruch 2, wobei sich der Erstreckungsabschnitt (26E) der ersten Seitenabdeckung (26) nach hinten erstreckt, während er sich in einem spitzen Winkel verjüngt, wobei seine vertikale Breite graduell abnimmt.

4. Antriebseinheit nach einem der Ansprüche 1 bis 3, wobei ein Filterelement (120) am Kühlungsluftstrom-Einlassanschluss (24Fe) der Getriebegehäuseabdeckung (24) eingefügt ist, und
die Vorderseiten-Abdeckrippe (26r) mit einem spitzen Rippenabschnitt (26rc) gebildet ist, welcher sich nach vorne erstreckt, um den Außenumfang des Filterelements (120) zu umgeben.

5. Antriebseinheit nach Anspruch 4, wobei eine zweite Vorderseiten-Abdeckrippe (26rr) gebildet ist, um weiter außen den spitzen Rippenabschnitt (26rr) der Vorderseiten-Abdeckrippe (26r), welcher den Außenumfang des Filterelements (120) umgibt, zu umgeben.

6. Antriebseinheit nach einem der vorhergehenden Ansprüche, wobei die erste Seitenabdeckung die Vorderseiten-Seitenabdeckung (126) ist und sich der Erstreckungsabschnitt (26E) davon nach hinten erstreckt, wobei die Hinterseiten-Seitenabdeckung (27) mit einem Ausnehmungsabschnitt (27D) in einem vorderen Abschnitt davon bereitgestellt ist.

7. Antriebseinheit nach einem der Ansprüche 1 bis 5, wobei die erste Seitenabdeckung die Hinterseiten-Seitenabdeckung (27) ist und sich der Erstreckungsabschnitt davon nach vorne erstreckt, wobei die Vorderseiten-Seitenabdeckung (26) mit einem Ausnehmungsabschnitt in einem hinteren Abschnitt davon bereitgestellt ist.

## Revendications

1. Groupe moteur (20) à monter sur un motocycle (1) comprenant un moteur à combustion interne (30) et une transmission sans étage de type à courroie (50) ayant une structure de refroidissement, ladite transmission sans étage de type à courroie (50) étant prévue sur un côté latéral d'un carter de transmission (23) servant également de carter de moteur pour supporter avec faculté de rotation un vilebrequin (40) du moteur à combustion interne (30), un capot de carter de transmission (24) étant disposé sur ledit carter de transmission (23) à partir d'un côté latéral de façon à couvrir ladite transmission sans étage de type à courroie (50) et à former une chambre de transmission (50C),
dans lequel une poulie d'entraînement (51), incluant une moitié de poulie mobile (51d) et une moitié de poulie fixe (51s) prévues au niveau dudit vilebrequin (40), est munie d'un ventilateur de refroidissement (51F) au niveau de ladite moitié de poulie fixe (51s) sur le côté du capot de carter de transmission (24) ;
ledit capot de carter de transmission (24) étant muni d'une lumière d'admission de flux d'air de refroidissement (24Fe) permettant d'introduire un flux d'air de refroidissement dans ladite chambre de transmission (50C), au niveau de sa partie à laquelle ladite valeur de refroidissement (51F) est opposée ;
une partie de moitié sensiblement avant dudit capot de carter de transmission (24) étant couverte avec un capot latéral de côté avant (26) à partir d'un côté latéral, et une partie de moitié sensiblement arrière dudit capot de carter de transmission (24) étant couverte d'un capot latéral de côté arrière (27) à partir d'un côté latéral ;
un premier (26) desdits capots (26, 27) étant muni au niveau d'une partie d'extrémité de celui-ci, d'une partie d'extension (26E) s'étendant vers l'autre capot latéral (27) et étant disposé en couverture sur ledit autre capot latéral (27) à partir d'un côté latéral externe, moyennant quoi un espace d'admission de flux d'air de refroidissement (127) est formé entre ladite partie d'extension (26E) et ledit autre capot latéral (27) le long d'un bord latéral de ladite partie d'extension (26E), et un passage d'admission de flux d'air de refroidissement (126) est formé, adjacent à ladite partie d'extension (26E) ;
**caractérisé en ce que**
ledit autre capot latéral (27) dans une partie d'extrémité de celui-ci face à ladite partie d'extrémité du premier capot latéral (26) est muni d'une partie évidée (27D) qui est évidée vers le côté du capot de carter de transmission (24) ; et
la partie d'extension (26E) dudit premier capot latéral (26) est disposée en couverture sur ladite partie évidée (27D) de l'autre capot latéral (27), moyennant quoi le passage d'admission de flux d'air de refroidissement (126) est formé entre ladite partie d'extension (26E) et ladite partie évidée (27D) ;
ledit passage d'admission de flux d'air de refroidissement (126) étant muni d'une nervure de capot de côté avant (26r) en saillie de ladite partie d'extension (26E) vers une paroi inférieure de ladite partie évidée (27D) dudit autre capot latéral (27), sensiblement parallèlement à un bord latéral de ladite partie d'extension (26E) dudit premier capot latéral (26), et étant muni d'une nervure de capot de côté arrière (27r) en saillie parallèlement à ladite nervure de capot de côté avant (26r) de ladite paroi inférieure de ladite partie évidée (27D) vers ladite partie d'extension (26E).

2. Groupe moteur selon la revendication 1, dans lequel ladite nervure de capot de côté avant (26r) est prévue entre un bord latéral de ladite partie d'extension (26E) et ladite nervure de capot de côté arrière (27r).

3. Groupe moteur selon la revendication 2, dans lequel ladite partie d'extension (26E) dudit premier capot latéral (26) est étendue vers l'arrière tout en étant évasée selon un angle aigu et sa largeur verticale diminuant progressivement.

4. Groupe moteur selon l'une quelconque des revendications 1 à 3, dans lequel un élément de filtre (120) est interposé au niveau de ladite lumière d'admission de flux d'air de refroidissement (24Fe) dudit capot de carter de transmission (24), et
ladite nervure de capot de côté avant (26r) est formée avec une partie arquée de nervure (26rc) s'étendant vers l'avant de façon à entourer la périphérie externe dudit élément de filtre (120).

5. Groupe moteur selon la revendication 4, dans lequel une seconde nervure de capot de côté avant (26rr) est formée de façon à entourer de façon plus externe ladite partie arquée de nervure (26rr), entourant la périphérie externe dudit élément de filtre (120), de ladite nervure de capot de côté avant (26r).

6. Groupe moteur selon l'une quelconque des revendications précédentes, dans lequel ledit premier capot latéral est le capot latéral de côté avant (126) et la partie d'extension (26E) de celui-ci s'étend vers l'arrière ; le capot latéral de côté arrière (27) étant muni d'une partie évidée (27D) dans une partie avant de celui-ci.

7. Groupe moteur selon l'une quelconque des revendications 1 à 5, dans lequel ledit premier capot latéral est le capot latéral de côté arrière (27) et la partie d'extension de celui-ci s'étend vers l'avant ; le capot latéral de côté avant (26) étant muni d'une partie évidée dans une partie arrière de celui-ci.
